(19) Europäisches Patentamt
European Patent Office
Office européen des brevets

(11) Publication number: **0 119 158 B1**

(12) **EUROPEAN PATENT SPECIFICATION**

(45) Date of publication of patent specification: **08.07.87**

(51) Int. Cl.[4]: **C 07 C 4/04**, C 10 G 9/38, C 01 B 3/36, C 07 C 11/02

(21) Application number: **84730020.9**

(22) Date of filing: **09.03.84**

(54) **Thermal cracking process for producing olefins and synthetic gas from hydrocarbons.**

(30) Priority: **14.03.83 JP 41932/83**

(43) Date of publication of application:
**19.09.84 Bulletin 84/38**

(45) Publication of the grant of the patent:
**08.07.87 Bulletin 87/28**

(84) Designated contracting states:
**DE FR GB IT**

(56) References cited:
**AT-B- 238 360**
**DD-A- 100 697**
**DE-A- 2 553 413**
**DE-A- 2 824 840**
**FR-A- 2 294 225**
**GB-A- 709 035**
**US-A- 4 264 435**

(73) Proprietor: **MITSUBISHI JUKOGYO KABUSHIKI KAISHA**
**5-1, Marunouchi 2-chome Chiyoda-ku**
**Tokyo 100 (JP)**

(72) Inventor: **Okamoto, Toshiro, c/o Mitsubishi Jukogyo K.K.**
**5-1, Marunouchi 2-chome**
**Chiyoda-ku, Tokyo (JP)**
Inventor: **Oshima, Michio, c/o Mitsubishi Jukogyo K.K.**
**Hiroshima Techn.Inst., 6-22 Kanonshinmachi 4-chome**
**Nishi-ku, Hiroshima City Hiroshima Pref. (JP)**

(74) Representative: **Meissner, Peter E., Dipl.-Ing. et al**
**Patentanwälte Dipl.-Ing. Peter E. Meissner Dipl.-Ing. Hans-Joachim Presting Herbertstrasse 22**
**D-1000 Berlin 33 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue St-Denis, 75001 Paris, France

**Description**

This invention relates to a process for producing olefins and synthetic gas consisting of hydrogen and carbon monoxide by thermal cracking of hydrocarbons. More particularly, it relates to a thermal cracking process for producing olefins and synthetic gas from hydrocarbons in which a hydrocarbon is first burnt with oxygen used in an amount less than the theoretical amount in the presence of steam to generate a hot or high temperature gas mainly composed of steam and a synthetic gas. This hot gas is used as a heat source and also as a hydrogen source for subsequent thermal cracking. To the hot gas containing the steam and the synthetic gas is added methane necessary for the thermal cracking reaction. A hydrocarbon is fed to the mixture and thermally cracked in coexistence of the methane, synthetic gas and steam, thereby producing olefins and a synthetic gas.

Such a method for simultaneously producing synthetic gas and olefins is known from DE-A-28 24 840.

The tube-type thermal cracking process called steam cracking is generally well known and has heretofore been used to convert, into olefins, light gaseous hydrocarbons such as ethane and propane as well as liquid hydrocarbons such as naphta and kerosine. In this process, heat is supplied from outside through tube walls, thus placing limitations on the heat transmission speed and the reaction temperature. Ordinary conditions for the process include a temperature below 850 °C, a residence time of from 0.1 to 0.5 second and a normal pressure. In view of these limitations imposed on the apparatus and the reaction conditions, the process may be applied only to gas oils and are not applicable to heavy oils such as residual oils. This is because high temperature and long-term reactions involve undesirable side reactions such as polycondensation and thus coking takes place, with a desired level of gasification being not attained. Instead of the above external heating system, several alternative processes have been proposed in which hydrogen or hydrocarbons are completely burnt with oxygen to generate a hot gas and this hot gas is used, as a heat source, to thermally crack starting hydrocarbons therewith.

In one such process, methane and hydrogen obtained by thermal cracking are completely burnt with oxygen to generate a hot gas. The hot gas is mixed with steam to give a hot reaction atmosphere which is as high as 800 to 1 600 °C, followed by thermally cracking a starting hydrocarbon under a pressure as low as about atmospheric pressure at a residence time of from 10 to 60 milliseconds, thereby producing olefins. In this process, however, the starting hydrocarbon is limited to light hydrocarbon fractions including gas oil. Application to heavy hydrocarbons cannot be expected because of the low rate of gasification and considerable coking.

In recent years, an improvement of the above process has been proposed in which the same starting materials and thermal cracking conditions as indicated above are used but methane and a residual oil are used as a fuel in a combustor instead of a mixture of hydrogen and methane and are partially burnt for a subsequent step. In this process, the hydrocarbon used as the fuel is different from a starting hydrocarbon in kind and an ordinary atmospheric steam cracking technique is used. The starting hydrocarbon materials are limited only to gas oils or materials of lower boiling points and no improvement in yield and selectivity of final products is not expected. It will be noted that the methane is used only as a fuel in an ordinary sense.

Another process comprises the steps of burning liquid hydrocarbons such as crude petroleum, as a fuel, with oxygen to generate a hot or high temperature gas and thermally cracking a hydrocarbon in the hot gas under conditions of a pressure of from 5 to 70 bars, a reaction temperature ranging of from 1 315 to 1 375 °C and a residence time of from 3 to 10 milliseconds. In this process, an inert gas such as $CO_2$, $N_2$ or the like is supplied from wall surfaces of a combustor and a reactor in the form of a film. By this, coking is suppressed, making it possible to thermally crack heavy hydrocarbons such as residual oils. Although this process enables one to suppress a starting oil from depositing on the walls or suppress coking as will be caused by polymerization of a generated thermally cracked gas on the wall surfaces, either coking by polycondensation of a starting oil itself, or polymerization or sooting of the cracked gases is not avoidable. Hence, an increase in yield of valuable gases cannot be expected. The suppression of the coking needs the feed of inert gas in substantial amounts, with the attendant drawback that an increased burden is imposed on a purification and recovery system for the cracked gases and the thermal economy of the process becomes poor.

A further process comprises partially burning hydrogen to give hot hydrogen gas and thermally cracking various hydrocarbons including heavy hydrocarbons in an atmosphere of the hot hydrogen gas under conditions of a reaction temperature of from 800 to 1 200 °C and a pressure of from 7 to 70 bars thereby obtaining olefins. According to this process, the thermal cracking in the hydrogen atmosphere makes it possible to effect the rapid heating and the thermal cracking within a super-short time, leading to suppression of coking. This is why the cracking of heavy hydrocarbons is possible. However, this process has the disadvantage that because the thermal cracking is carried out in the presence of a large amount of hydrogen, once produced valuable olefins are converted by hydrogenation into less valuable methane. The formation of methane by the hydrogenation involves generation of heat in a substantial degree and the reaction temperature rises. As a result, there is the tendency toward a runaway reaction where the hydrogenation reaction is more promoted and methane is more easily generated. This accrues to a sharp

reduction in amount of ethylene with methane being form in large amounts. Thus, it is difficult to maintain the yield of olefins at a high level. A more serious problem is that the formation of methane involves a consumption of valuable hydrogen. In other words, valuable hydrogen is used to convert once formed valuable ethylene and the like into less valuable methane, causing a great economic loss.

We have already found and proposed a process in which the thermal cracking is effected in an atmosphere of methane, hydrogen and steam to attain selective formation of olefins in a higher yield than in prior art processes. In our proposed process, methanization of olefins with hydrogen is suitably suppressed without impeding the advantage due to the presence of hydrogen.

We have made further and intensive studies to develop a thermal cracking process of producing olefins from a wide variety of hydrocarbons including light and heavy hydrocarbons to selectively obtain desired types of olefins in high yields along with synthetic gas while suppressing coking. As a result, it has been found that thermal cracking of hydrocarbons effectively proceeds in an atmosphere which is obtained by burning a hydrocarbon with oxygen used in an amount less than the theoretical amount in the presence of steam to obtain a hot synthetic gas ($CO + H_2$) containing steam. To the hot synthetic gas is fed a predetermined amount of methane to the hot synthetic gas. A desired type of hydrocarbon is thermally cracked as desired in such atmosphere. By the thermal cracking, desired types of olefins and BTX (benzene, toluene and xylene) and the synthetic gas are obtained in high yields even from heavy hydrocarbons without causing coking.

Moreover, olefins and BTX may be also obtained from gas oils such as naphtha in much higher yields than in the case of prior art processes. The present invention is accomplished based on this finding.

It is accordingly an object of the present invention to provide a thermal cracking process which is useful for converting almost all types of hydrocarbons including heavy hydrocarbons into valuable olefins.

It is another object of the invention to provide a thermal cracking process in which not only valuable olefins, but also synthetic gas consisting of carbon monoxide and hydrogen is also obtained.

It is a further object of the invention to provide a thermal cracking process for producing olefins and a synthetic gas from hydrocarbons in which little or no coking takes place even when using heavy hydrocarbons.

According to the present invention, there is provided a thermal cracking process for producing olefins and synthetic gas from hydrocarbons, the process comprising the steps of burning a hydrocarbon with less than the theoretical amount of oxygen in the presence of steam to give a hot gas of from 1 200 to 2 500 °C containing steam and a synthetic gas (wherein the hydrocarbon is burnt from 0,5 to 30 on the weight basis), feeding methane to the hot gas containing the steam and the synthetic gas such that a molar ratio of methane to hydrogen is over 0.05 to 4.0, further feeding a starting hydrocarbon being thermally cracked to the hot gas containing the methane, synthetic gas and steam, keeping the mixture at the outlet of a reactor under conditions of a partial pressure of hydrogen not less than 0.1 bar, a temperature ranging from 800 to 1 200 °C, and a residence time ranging from 5 to 300 milliseconds thereby thermally cracking the hydrocarbon, and quenching the resulting product.

According to the present invention, heat energy necessary for the thermal cracking reaction is supplied in the form of a hot gas comprising steam and synthetic gas which is obtained by partial burning of hydrocarbons with oxygen in the presence of steam. This energy is obtained by the internal combustion, so that such a high temperature as will not be attained by external heating can be easily obtained with the heat generated being utilized without a loss. The heating by the internal combustion of hydrocarbons has been heretofore proposed. For the purposes, gaseous hydrocarbons and clean oils such as kerosine are mainly used and a complete combustion system is adopted. Use of heavy oils has also be proposed. However, burning of such oils will cause coking and sooting, which requires circulation of an inert gas such as $CO_2$, $N_2$ or the like in larger amounts as described before.

In the thermal cracking process of the invention, hydrocarbons are first burnt in the presence of steam, part of which is required for a subsequent reaction section, in amounts of 1 to 20 times by weight as large as that of the fuel hydrocarbon, with oxygen in amounts less than the theoretical. The reason why the hydrocarbon is burnt with less than the theoretical amount of oxygen is to keep hydrogen in an amount sufficient for a chemical consumption in the subsequent reaction section and also hydrogen which is not consumed but contributes to promote gasification. According to the present invention, burning conditions are alleviated and coking and sooting can be suitably suppressed by gasification of solid carbon with steam and carbon dioxide.

One of prominent features of the invention resides in that the consumption of hydrogen due to the outflow of unreacted or molecular oxygen toward a subsequent section or a loss of effective components is prevented ; and burning conditions in a combustor through which hydrogen consumed by the reaction is intentionally supplemented are properly selected.

On the other hand, the steam fed to the reaction system is readily condensed by quenching and recovered as is different from $CO_2$, $N_2$ and other gases which are separated in a separation and purification system for cracked gases by consumption of large energy, with the advantage of increasing little or no burden on the purification system.

The process of the invention is described in more detail.

Hydrogen contained in the atmosphere of the reaction has the following advantages. Firstly,

hydrogen has a much higher thermal conductivity than other substances. As a result, even heavy hydrocarbons can be quickly heated to raise temperatures thereof. Especially, when heavy hydrocarbons are used as starting materials, the residence time is in the liquid phase can be so shortened that the polycondensation reaction which is a liquid phase reaction can be suppressed, leading to a high gasification rate. Secondly, not only the polycondensation reaction in the liquid phase can be suppressed by hydrogenation as described above, but also supplement of hydrogen from outside which is deficient relative to the carbon content when heavy hydrocarbons are used as a starting material results in an increased amount of light gases. With regard to the formation of coke from the gas phase, an amount of acetylene which may be a precursor for the reaction can be reduced. Thirdly, hydrogen serves to increase a radical concentration in the reaction system and thus high cracking and gasification speeds can be achieved. This effect is more pronounced under high temperature and high pressure conditions as used in the present invention. However, the use of hydrogen has also disadvantages which should not be overlooked. Because of the presence of hydrogen, olefins are consumed particularly under pressure with the tendency toward formation of saturated products. This is nothing but the most serious problem involved in prior art thermal cracking processes using hydrogen atmosphere. In an atmosphere consisting of hydrogen alone, propylene and ethylene produced by thermal cracking of starting hydrocarbons are hydrogenated according to the following reactions (1) through (3)

$$C_3H_6 + H_2 \rightarrow C_2H_4 + CH_4 \quad (1)$$

$$C_2H_4 + H_2 \rightarrow C_2H_6 \quad (2)$$

$$C_2H_6 + H_2 \rightarrow 2CH_4 \quad (3)$$

Consequently, methane and ethane increase in amounts and particularly a considerable increase in amount of methane is not avoidable. In this connection, however, all the propylene and ethylene do not disappear. This is because the formation reaction speeds of these olefins are higher than the speeds of the reaction (1) through (3). Even though the reaction system is quenched for reaction freezing, the olefins are lose during a very short quenching time according to the reaction (1) through (3).

One of prominent features of the present invention resides in that not only hydrogen, but also methane is added to the atmosphere prior to commencement of the reaction. By this, hydrogenation which is the most serious problem involved in the use of hydrogen is suppressed without impeding the advantage caused by the presence of hydrogen. If a large amount of methane is added to the reaction atmosphere, the conversion reactions (4), (5) and (6) of methane into ethane, ethylene and the like proceed simultaneously with the reaction (1) through (3)

$$2CH_4 \rightarrow C_2H_6 + H_2 \quad (4)$$

$$C_2H_6 \rightarrow C_2H_4 + H_2 \quad (5)$$

$$C_2H_4 + CH_4 \rightarrow C_3H_8 \rightarrow C_3H_6 + H_2 \quad (6)$$

By this, the conversion into methane by hydrogenation can be presented.

Moreover, proper control of the reaction temperature, pressure and methane/hydrogen ratio in the atmosphere promotes decomposition of methane. Thus, the added methane can be converted to more valuable ethylene, ethane and acetylene. For instance, when the reaction (4) and (5) for producing ethylene from methane are considered to be elementary reactions, the following reaction takes place. Under high temperature conditions, highly active methyl radicals ($CH_3$.) are produced from methane. The methyl radicals are re-combined to give ethane. Subsequently, the withdrawal reaction of hydrogen or hydrogen radical (H.) takes place, so that ethane is converted directly or via ethyl radical ($C_2H_5$.) into ethylene. This is represented according to the following reaction formula

$$2CH_3\cdot \rightarrow C_2H_6 \rightarrow C_2H_5\cdot + H\cdot$$

$$C_2H_6 \searrow C_2H_4 + H_2; \quad C_2H_5\cdot \xrightarrow{-H\cdot} C_2H_4 + H_2$$

This formation reaction of the methyl radical proceeds as follows in coexistence of hydrogen and methane

$$CH_4 + H\cdot \rightleftarrows CH_3\cdot + H_2$$

Accordingly, if methane is present in large amounts, the concentration of the hydrogen radicals is

reduced with an increased concentration of the methyl radicals. That is, methane serves as an absorbent for the hydrogen radical and thus prevents the hydrogenation reaction of olefins with the hydrogen radical. In addition, it has the ability to promote the dehydrogenation reaction and simultaneously convert the methane, which may be formed by recombination of the produced methyl radicals, into ethane and ethylene.

Methane does not serve as a diluent but contributes to an increased yield of ethylene and the like in view of the reaction mechanism as discussed hereinabove. The atmosphere comprising methane and hydrogen used in the present invention shows significant differences in performance and effect over prior art hydrogen atmospheres which are diluted merely with steam, an inert gas or the like. In addition, the effects of the addition of methane is shown with the advantages of hydrogen being rarely reduced.

The steam fed to the combustion section serves acts to suppress coking in the reaction section according to the following water gas reaction

$$C + H_2O \rightarrow CO + H_2 \text{ or}$$

$$C + CO_2 \rightarrow 2CO$$

Thus, valuable hydrogen can be recovered from heavy coking substances (CO is convertible into hydrogen according to the shift reaction). As a result, a reduction in amount of hydrogen necessary for the reaction atmosphere becomes possible, and the reaction atmosphere is thus so mild that hydrogenation of valuable olefins such as propylene, butadiene and the like are suitably prevented by the co-action with methane. The yields of propylene and butadiene increase with a reduced consumption of hydrogen.

The hydrogen necessary for the thermal cracking reaction of the invention is all generated by partial oxidation of the fuel and it is thus unnecessary to recycle hydrogen from a separation and purification system of the product and make up hydrogen in an amount corresponding to a chemical consumption of hydrogen occurring during the reaction. In prior art practice, the hydrogen which is made up because of the chemical consumption of hydrogen is usually obtained by generating a hot reformed gas (crude synthetic gas) mainly composed of hydrogen and carbon monoxide by a separate steam reforming such as of methane, and subjecting the crude synthetic gas to cooling, shift reaction, and separation, purification and re-heating of hydrogen while consuming large quantities of heat and separation energy. A large quantity of hydrogen which is not consumed by the reaction but is present in the reaction system and contributes to expedite the gasification is usually reused by recycling it from the separation and purification system to the reactor. In contrast, in the thermal cracking process of the present invention, a desired type of hydrocarbon fuel including a heavy hydrocarbon such as asphalt is partially oxidized with less than the theoretical amount of oxygen in a combustor located upstream of the reactor. By the oxidation, all hydrogen which is required for the reaction including make-up hydrogen corresponding to the hydrogen chemically consumed in the thermal cracking reaction of hydrocarbons is generated. That is, the hot hydrogen containing CO, $CO_2$, $H_2O$ and the like may be utilized for the reaction without being separated or purified. Thus, in the practice of the invention, no operations of cooling, separation, purification and heating required for the generation of hydrogen as in the steam reforming technique are necessary. In addition, the heat energy of the hot hydrogen generated may be applied, as it is, in the subsequent thermal cracking reaction which proceeds endothermically. In this way, the hydrogen for the reaction is fed to the reactor in high heat efficiency. The hydrogen being recycled is not necessary, so that the power for the recycling operation is unnecessary.

CO generated by the partial oxidation does not bring about any harmful reactions in the reactor and functions as a heat transfer medium. This carbon monoxide is finally recovered in the separation system, without being fed back to the reactor, as synthetic gas ($H_2$ + CO) which is useful in synthesizing methanol, synthetic gasoline and $C_1$ component.

For the synthesis of methanol or $C_1$ component, relatively high pressures are used in many cases. For instance, the synthesis operation is carried out at 50 to 100 kg/cm$^2$G for methanol and at 20 to 40 kg/cm$^2$G for gasoline. The thermal cracking process for the production of olefins according to the invention are operated under high pressure conditions. Accordingly, the synthetic gas obtained by the process may be used as it is or after increasing its pressure for the purpose of synthesizing the aboveindicated compounds. To this end, it is desirable to properly control the thermal cracking reaction pressure and/or the separation and purification pressure in view of the purpose and amount of the synthetic gas.

Methane which is essentially required for the reaction of the invention as one component of the reaction atmosphere at a defined ratio to the hydrogen is fed. Methane which is obtained from the product separation and purification system, say, the top of a demethanizer (e. g. it may contain impurities such as $H_2$) is recycled and fed to a portion located dowstream of the combustor but upstream of the reactor. Alternatively, methane may be fed simultaneously with a starting material. Cracking conditions are so controlled that the methane necessary for the thermal cracking reaction is self-supplied in an amount equal to that of the methane obtained by the thermal cracking reaction.

A prominent feature of the present invention is that as is different from prior art processes, the yield of

methane can be arbitrarily controlled to be at a desired level by a proper combination of the methane/hydrogen ratio and the severity of cracking conditions. This is attributable to such a mechanism that methane is easily converted into useful components under certain operating conditions. For instance, in order that the yield of methane is caused to be zero and useful components such as olefins are increased so much, it is sufficient to raise the methane/hydrogen ratio and shorten the cracking time. Because methane is relatively easily convertible to valuable components, it will be seen that a fuel for internally supplying the heat of reaction to the reactor may preferably be hydrocarbons of rather poor quality such as asphalt, non-cracked residues or the like.

In case where the yield of methane is higher than as required for the reaction, yields of useful components lower, so that all the generated methane should be recycled for the reaction. In this case, the methane/hydrogen ratio temporarily increases but the reaction system is autonomously controlled toward the direction that the yield of methane is reduced for the reason described before. For this reason, the methane by-product is fundamentally circulated and used for the reaction and is not used as a fuel. On the other hand, the methane from the product separation and purification system is subjected to recovery of all recoverable heat, after which it is ordinarily added directly to the hot gas, from the combustor, comprising steam and the synthetic gas without preheating in order to avoid heat and apparatus losses. The methane may exceptionally be preheated in view of the heat or fuel balance.

Figure 1 is a flow chart showing a process of the invention according to one embodiment of the invention ;

Figure 2 is a graph showing the relation between the yield of coke and the partial pressure of hydrogen ;

Figure 3 is a graph showing the relation between the yield of $C_2$-$C_4$ olefins and ethane and the residence time for different methane/hydrogen molar ratios ;

Figure 4 is a graph showing the relation between the yield of $C_2$-$C_4$ olefins and ethane and the reaction pressure for different methane/hydrogen molar ratios ;

Figure 5 is a graph showing the relation between yields of various products and the temperature at the outlet of a reactor ; and

Figure 6 is a graph showing the relation between yields of olefins and the partial pressure of hydrogen.

Reference is now made to the accompanying drawings and particularly Fig. 1 which shows an embodiment of the thermal cracking process of the invention. In the figure, a fuel hydrocarbon 1 is pressurized to a predetermined level by means of a fuel hydrocarbon feed pump 2 and fed to a combustor 6. To the combustor 6 are fed highly concentrated oxygen 4 from an oxygen generator 3 and preheated steam from a line 5. In the combustor 6, the fuel hydrocarbon 1 is partially oxidized with less than the theoretical amount of oxygen in the presence of steam to generate a hot gas combustion gas stream 7 of from 1 200 to 2 500 °C comprising chiefly synthetic gas of hydrogen and carbon monoxide. The steam may be fed singly or in admixture with oxygen or a fuel. In order to protect the walls of the combustor 6 or to allow decoking by reaction between coke and the synthetic gas, the steam may be fed along the walls.

The hot fuel gas stream 7 from the combustor 6 is subsequently mixed with methane from a line 27 and fed into a reactor 10. The methane may be fed to a portion located upstream of the reactor 10 or at a position substantially the same as a starting hydrocarbon is fed. To the reactor 10 is fed by means of a feed pump 9 a starting hydrocarbon 8 which is pressurized to a predetermined level, in which the hydrocarbon 8 is brought into contact and mixed with the hot combustion gas stream comprising the steam, methane and synthetic gas and rapidly heated. As a result, the starting hydrocarbon 8 undergoes the thermal cracking reaction by the action of the hydrogen, methane and steam, thereby generating a reaction effluent 11 comprising a major proportion of olefins.

The reaction effluent 11 is immediately quenched in a quenching unit 12. The quenching unit may be, for example, a direct quencher in which water or oils (including thermally stable oils permitting the quenching effect by sensible heat thereof or oils capable of producing the quenching effect by ready, endothermic decomposition thereof) is directly sprayed against the reaction effluent, or an indirect quenching heat exchanger in which two fluids are passed through the inside and outside of a tube and heat exchanged. Both devices may be used in combination. Immediately after the quenching, a non-cracked residue 14 is withdrawn for use as a fuel of a boiler or the hydrocarbon fuel 1.

Next, the reaction effluent 13 is passed into a high temperature separation system 15 consisting of a gasoline fractionator, a quencher, an oil-water separator and the like in which it is separated into cracked gas 16, fuel oil 18, process water 17 and cracked gasoline 19 including BTX. In an acidic gas separation and purification unit 20, carbon dioxide gas and hydrogen sulfide 32 are separated, followed by separating synthetic gas 22 consisting of hydrogen and carbon monoxide in a synthetic gas separator 21 using butane or the like as an absorbent. Subsequently, in order to prevent formation of hydrates in a low temperature gas separation system, moisture is removed in a dryer 23 from the reaction effluent, which is then passed into a product separation and purification apparatus 24. In the product separator 24, methane 25, olefins 28 such as ethylene, propylene and the like, paraffin hydrocarbons 30 such as ethane, propane and the like, $C_4$ components 29, and a fraction 19 of a boiling point 200 °C including $C_{5+}$ or higher components and BTX are separated from one another. The paraffin hydrocarbons 30 are introduced into a steam cracking apparatus 31 in which they are recovered as ethylene and propylene.

Alternatively, the paraffin hydrocarbons 30 may be directly recycled to the reactor.

The methane 25 is, if necessary, pressurized by a compressor 26 and is recycled through a line 27 to the reactor 10 for the cracking reaction. The reactor 10 is operated at a pressure as high as 5 to 100 $Kg/cm^2$ G (4.9 to 98 bars), preferably 30 to 100 $Kg/cm^2$ G, so that a compressor for the cracked gas 16 which will be necessary for ordinary separation and purification operations is not used in the practice of the invention. In this connection, the synthetic gas 22 has a pressure of from 30 to 100 $Kg/cm^2$ G (29.4 to 98 bars). For example, where the synthetic gas is used for synthesizing methanol, no gas compressor is necessary because catalytic activity for the methanol synthesis is improved and thus low pressure synthesis is possible.

The carbon dioxide 32 from the acidic gas separator 20 is recycled and effectively utilized as a carbon source for the methanol synthesis. More particularly, the $H_2/CO$ molar ratio may be properly controlled either by feeding fresh steam to the reaction effluent 11 of 800 to 1 100 °C after the thermal cracking but before the quenching thereby increasing the $H_2/CO$ molar ratio according to the reaction, $CO + H_2O \rightarrow H_2 + CO_2$, or by feeding carbon dioxide from the acidic gas separator to the reaction effluent 11 thereby decreasing the $H_2/CO$ molar ratio according to the reverse of the aboveindicated reaction.

The starting hydrocarbons being treated include light hydrocarbons such as light naphtha, heavy hydrocarbons such as asphalt, shale oil, bitumen, coal-liquefied oil, and, in some cases, solid slurries and solid hydrocarbonaceous substances. It is important to note that according to the present invention, any hydrocarbons including light to heavy hydrocarbons may be converted into olefins, BTX and synthetic gas in high yield, high selectivity and high heat efficiency by proper combination of hydrogen, methane and steam. Especially, when coal is used as a starting material, it is important to effect the thermal cracking reaction under a relatively low pressure at a methane/hydrogen molar ratio as high as possible, e. g. a methane/hydrogen molar ratio not smaller than 4. The fuel hydrocarbons may be any of the aboveindicated starting hydrocarbons. It is not necessary that hydrocarbons used as the fuel and the starting material are the same in kind.

The fuel hydrocarbons are not limited to any specific ones and may include coal, cracked oils and non-cracked residues obtained from the thermal cracking process, light gases from the separation and purification system from which methane and hydrogen necessary for the thermal cracking process have been removed, and the like. Preferably, heavy hydrocarbons such as asphalt, and non-cracked and cracked residues irrespective of the type of starting hydrocarbon.

The effects, advantages and features of the thermal cracking process of the invention are described.

The thermal cracking process of the invention have a number of advantages over prior art processes. According to the process of the invention, hydrocarbons are burnt with less than the theoretical amount of oxygen in the presence of steam thereby generating heat energy necessary for the thermal cracking reaction and synthetic gas containing hydrogen necessary for the reaction. To the resulting gas stream is recycled and fed methane which is obtained from the product separation and purification system. The methane should be fed upstream of the reactor. By this, it is possible to cause methane, hydrogen and steam in predetermined amounts to selectively and intentionally be present in the reaction atmosphere prior to the reaction. This may bring about the following good effects and results.

1) In a certain range of partial pressure of hydrogen or partial pressure of methane which is necessary and favorable for producing olefins in high yields from starting hydrocarbons in the presence of steam, undesirable paraffination of the olefins with hydrogen is suppressed by the action of the methane. Additionally, hydrogen itself has the function of promoting the gasification. As a result, it becomes possible to produce useful components such as olefins from a wide variety of starting hydrocarbons including light hydrocarbons such as naphtha and heavy hydrocarbons such as asphalt in much higher yields than in the case of prior art processes. For instance, according to prior art processes, asphalt may be converted to olefins in a yield of about 25 %. The yield of olefins is as high as about 45 % according to the present invention.

2) In order to enhance the selectivity to ethylene (a ratio of ethylene to all olefins produced), a high partial pressure of hydrogen within the afore-indicated favorable range should be used. In order to increase selectivities to propylene and butadiene, a low to moderate level of the partial pressure within the defined range should be used. The selectivity to any desired product may be properly controlled.

3) Heavy hydrocarbon materials have higher content of polycyclic aromatic hydrocarbons, which are difficult to thermally crack, than light hydrocarbon materials. This needs to keep the partial pressure of hydrogen at a relatively high level in order to ensure a desired gasificafion rate (i. e. a ratio of weight of a starting hydrocarbon fed to the reactor from which the weight of the hydrocarbon remained non-cracked, to the weight of the starting hydrocarbon feed). In addition, the selectivity to a desired product may be further controlled by properly controlling the partial pressure of hydrogen a discussed in item (2).

4) An arbitrary fuel hydrocarbon is partially oxidized in the presence of steam to generate a hot gas mainly composed of steam and synthetic gas ($H_2 + CO$), by which the heat of reaction and hydrogen which are essential for the subsequent thermal cracking reaction are generated. Moreover, there is obtained synthetic gas which has a pressure as high as 30 to 100 $Kg/cm^2$ G and has such a controlled composition that it can be fed as it is to a synthesis unit such as for valuable methanol. In other words, the purpose of producing olefins in high selectivity and high yield by thermal cracking of hydrocarbons in the presence of is attained simultaneously with the production of synthetic gas. Both olefins and synthetic

gas are produced efficiently from the standpoint of heat balance and reaction mechanism, leading to an epoch-making, highly efficient, thermal cracking process.

5) In the thermal cracking reaction which essentially requires hydrogen therefor, part of the hydrogen is consumed chemically or by hydrogenation and has to be made up and part of the hydrogen is not consumed but is used to promote gasification. All the hydrogen is supplied by partial oxidation of hydrocarbons in a combustor, so that recycle of hydrogen from the separation and purification system is unnecessary. Part of the hydrogen generated by the partial oxidation of hydrocarbons is chemically consumed but most hydrogen is recovered along with CO as an intermediate product « synthetic gas » which is suitable for synthesis of methanol, synthetic gasoline and/or $C_1$ chemicals. On the other hand, methane used for the reaction is all recycled from the separation and purification system immediately before the reactor and is combined with the hydrogen from the partial oxidation section, followed by feeding to the reactor in a desired methane/hydrogen molar ratio.

6) When asphalt is used as a fuel for the partial oxidation, a molar concentration of hydrogen in the mixture of steam, methane and synthetic gas prior to feed of a starting hydrocarbon may be greatly varied depending on the steam/fuel ratio, the oxygen/fuel ratio and the like and is usually controlled to be in the range of from 3 to 35 %. By suitably controlling the hydrogen concentration, i. e. a partial pressure of hydrogen, and its combination with the type of starting hydrocarbon, a desired ratio of generated olefins and synthetic gas is attained. For instance, when the steam/fuel ratio and the oxygen/fuel ratio are, respectively, from 1 to 8 and 1 to 2 on the weight basis, the molar concentration of hydrogen is as high as 10 to 35 % prior to feed of a starting hydrocarbon. Accordingly, use of heavy hydrocarbons such as asphalt results in a high yield of olefins and particularly high selectivity to $C_3$ and $C_4$ olefins. Use of light hydrocarbons such as naphtha results in a high yield of ethylene and a large amount of synthetic gas with a $H_2$/CO molar ratio below 2 which is the most suitable material for preparing methanol.

On the other hand, when the steam/fuel ratio and the oxygen/fuel ratio are, respectively, over 8 and over 2 on the weight basis, the molar concentration of hydrogen is as low as below 10 %. Olefins are obtained in high yield from starting light hydrocarbons and proper selection of operating conditions permits formation of $C_3$ and $C_4$ olefins in high selectivity and generation of synthetic gas having a hydrogen/carbon monoxide molar ratio not smaller than 2. It will be noted that a desired selectivity or yield may be attained by suitably controlling the total pressure, yield of methane, steam/fuel ratio, oxygen/fuel ratio, hot gas/starting material ratio, cracking severity.

7) All hydrogen directly or indirectly required for the thermal cracking reaction is obtained by partial oxidation of hydrocarbons. In order to prevent a loss of useful components such as methane recycled to the reactor and olefins generated in the reactor by oxidation with an excess of unreacted oxygen, a fuel of low quality such as asphalt is partially oxidized in a combustor with less than the theoretical amount of oxygen in the presence of steam. By the partial oxidation, hot synthetic gas containing hydrogen is generated and may be utilized, as it is, as hydrogen which directly or indirectly contributes to the thermal cracking reaction in the subsequent reaction section. The hot synthetic gas may be used without cooling, separation and purification of the hydrogen, re-heating, recycling and the like. In other words, any additional energy required for heating, separation and purification and recycling is needed in the process of the invention.

8) Hydrogen required for the reaction and obtained by partial oxidation of hydrocarbons is an essential component which promotes gasification of a stating material and suppresses coking. Methane is also an essential component which suppresses paraffination of useful components such as olefins. The yield or amount of methane is controlled by proper selection of operating conditions in the range from zero to such an amount as to ensure a methane/hydrogen ratio necessary for the cracking reaction. It will be noted that in prior art thermal cracking processes, methane is invariably, secondarily generated in an amount of about 10 % and is used as a fuel for thermal cracking along with hydrogen by-product.

9) The thermal cracking of hydrocarbons is carried out in the presence of steam, methane and hydrogen, so that coking is more effectively suppressed than in prior art processes.

10) Coexistence of methane permits suppression of methanization of olefins by hydrogenation. This results in an increase of olefins with a proportional reduction in consumption of expensive hydrogen.

11) Because generation of heat accompanied by hydrogenation of olefins is suppressed, the distribution of yield is changed only gently depending on the reaction temperature, residence time and quenching time. This gentle change is very effective in improving operability and controllability of the system.

12) With heavy hydrocarbons, atomization of oil droplets is important in order to attain high gasification rate, improve yields of useful components and suppress coking. One of methods for realizing such atomization is that the hot gas is used in large amounts relative to a starting hydrocarbon whereby the shearing effect of the gas on the starting oil droplets is increased. In the practice of the invention, steam is used as is different from prior art processes which make use of hydrogen and inert gases. The steam is readily recovered by cooling, oil droplets can be atomized without involving any addition burden on the purification system.

13) Since burning is effected in the presence of steam in large amounts, the burning temperature is lowered with the possibility of suppressing coking and sooting. This permits use of heavy hydrocarbons such as asphalt as a favorable fuel. Instead of steam, water may be used to promote the effects of this and

preceding items.

14) Hydrocarbons are burnt with oxygen of high concentration and thus little inert gas is contained in the burning atmosphere. Accordingly, only a reduced burden is imposed on the separation and purification system.

15) The system is operated under pressure, so that an energy required for raising the pressure of a cracked gas for purification can be drastically reduced.

From the foregoing, it will be seen that desired products can be selectively obtained from arbitrary starting hydrocarbons in high heat efficiency and in high yield without involving coking.

The thermal cracking process of the invention are described in more detail by way of example, which should not be construed as limiting the present invention thereto.

## Example

In this example, a vacuum residue of middle east petroleum having a specific density of 1.02, a sulfur content of 4.3 % and a pour pint of 40 °C was used as a starting hydrocarbon material and also as a fuel.

The vacuum residue was partially oxidized with oxygen in a combustor located above a reactor while blowing steam preheated to 500 °C from all directions, thereby generating a hot gas comprising hydrogen and carbon monoxide. The oxygen used was a highly concentrated oxygen gas (having an oxygen concentration of over 95 %) obtained by the low temperature gas separation process of air. (If the synthetic gas is used to prepare ammonia, the fuel is preferably oxidized with air). Downstream of the combustor, methane gas which was not heated and kept at a normal temperature or was preheated was blown into the top of a reactor and mixed with the hot gas. Thereafter, the vacuum residue was sprayed for thermal cracking from a plurality of asphalt burners provided at inner side walls of the reactor. The resulting product was quenched by directly injecting water from a cooler provided integrally with the reactor at the lower portion thereof and was analytically measured. The residence time was determined by calculation of the capacity of the reactor.

Naphtha (boiling point : 40 to 180 °C) was also thermally cracked using the same system and procedure as described above and the resulting product was determined. The steam/fuel ratio by weight was changed in the respective tests within a range of from about 0.5 to 30 so that the reaction system was maintained under certain reaction conditions.

Fig. 2 is a graph showing the relation between the partial pressure of hydrogen and the yield of coke in case where the vacuum residue from middle east petroleum and naphtha were each thermally cracked under conditions of a reactor outlet temperature of 1 000 to 1 020 °C, a $CH_4/H_2$ molar ratio of 0.5, a total pressure of 30 bars and a residence time of 20 milliseconds. In the figure, indicated by a is a curve of the yield of coke where the vacuum residue from middle east petroleum was thermally cracked and by b is a curve of the yield of coke where naphtha was thermally cracked. As will be clearly seen from fig. 2, the increase of the partial pressure of hydrogen results in a drastic decrease in amount of coke. When the partial pressure of hydrogen is kept at a level over 15 bars, inclusive, the yield of coke can be suppressed in avery low degree even with heavy hydrocarbons such as the vacuum residue. In Fig. 2, the yield of coke is also shown in case where naphtha is used as a light hydrocarbon for comparison with the heavy hydrocarbon. In this case, the formation of coke is suppressed at an increased partial pressure of hydrogen. The effect of the hydrogen partial pressure on the heavy hydrocarbon is more effective.

Fig. 3 is a graph showing the relation between the total yield of $C_2$-$C_4$ olefins and ethane and the residence time for different $CH_4/H_2$ molar ratios in case where the vacuum residue is thermally cracked under conditions of a total pressure of 30 bars and a reactor outlet temperature of 1 000 °C to 1 030 °C. The reason why the yield of ethane is evaluated by addition to the yield of $C_2$-$C_4$ olefins is that the amount of ethane is relatively large and ethane can be simply converted into ethylene. As will be clear from Fig. 3, an increased ratio of methane results in an increase of the total yield of the $C_2$-$C_4$ olefins and ethane. Further, the variation of the yield in relation to the residence time becomes small with the distribution of the yield being stabilized. The ratio of the $C_2$-$C_4$ olefins to the total of the $C_2$-$C_4$ olefins and ethane (the yield of ethane is from 5 to 10 %), i. e. ($C_2$-$C_4$ olefins)/($C_2$-$C_4$ olefins and ethane), is larger in a higher ratio of methane. When the $CH_4/H_2$ molar ratio is 1, the ratio is from 10 to 40 % though such a ratio becomes smaller for a longer residence time. These results demonstrate that the addition of $CH_4$ leads to a high yield of olefins as compared with the case where no $CH_4$ is added, i. e. $CH_4/H_2 = 0$. The variation of the yield relative to the residence time is remarkably improved. This effect of $CH_4$ is shown even in a $CH_4/H_2$ molar ratio of 0.05 and is more pronounced when the molar ratio is over 0.1. The residence time may be selected from a wide range of from 5 to 300 milliseconds.

Fig. 4 is a graph showing the relation between the pressure and the total yield of $C_2$-$C_4$ olefins and ethane in case where the vacuum residue was thermally cracked under conditions of a reactor outlet temperature of from 1 000 to 1 020 °C, a residence time of 20 milliseconds and a $CH_4/H_2$ molar ratio of 0 or 0.5. The results of Fig. 4 reveal that the influence of the pressure on the total yield of the $C_2$-$C_4$ olefins and ethane is almost negligible when the $CH_4/H_2$ molar ratio is 0.5. In contrast, with the system using no $CH_4$, an increased pressure causes the $C_2$-$C_4$ olefins and ethane to be abruptly methanated by hydrogenation or decomposition, thus considerably lowering the yield of the $C_2$-$C_4$ olefins and ethane.

Fig. 5 is a graph showing the relation between the total yield of $C_2$-$C_4$ olefins and ethane and yield

of coke and the outlet temperature of the reactor in case where the vacuum residue was thermally cracked under conditions of a total pressure of 30 bars, a residence time of 20 milliseconds and a $CH_4/H_2$ molar ratio of 0 or 0.5. In the figure, indicated by a is a curve illustrating the relation between the total yield of the $C_2$-$C_4$ olefins and ethane and the outlet temperature for the $CH_4/H_2$ molar ratio of 0.5 ; by b is a curve showing the relation between the total yield of the $C_2$-$C_4$ olefins and ethane and the outlet temperature for the $CH_4/H_2$ molar ratio of 0 ; by c is a curve illustrating the relation between the yield of acetylene and the outlet temperature for the $CH_4/H_2$ molar ratio of 0.5 ; and by d is a curve showing the relation between the yield of coke and the outlet temperature. As will be seen from the figure, when the $CH_4/H_2$ molar ratio is 0.5 and the outlet temperature is from 800 to 1 200 °C, the yield of the $C_2$-$C_4$ olefins and ethane is as high as over 40 %. However, at temperatures lower than 800 °C the reaction speed drastically lowers, with the result that the total yield of the $C_2$-$C_4$ olefins and ethane also lowers considerably. On the other hand, at high temperatures, acetylene is formed by dehydrogenation of ethylene and decomposition of methane. This tendency becomes more pronounced at temperatures over 1 200 °C and thus the yield of the $C_2$-$C_4$ olefins and ethane sharply lowers. As a result, an amount of coke which is considered to result from the polycondensation of acetylene increases. Only for comparison purpose, the process using a $CH_4/H_2$ molar ratio of 0 or no methane is carried out as described above. In this case, drastic hydrogenation of the $C_2$-$C_4$ olefins and ethane takes place at an elevated temperature, thus lowering the yield of the olefin components considerably.

Fig. 6 is a graph showing the relation between the yield of ethylene or $C_3$ and $C_4$ olefins and the partial pressure of hydrogen at the outlet of the reactor in case where the vacuum residue and naphtha were each thermally cracked under conditions of a reactor outlet temperature of from 1 000 to 1 020 °C, a total pressure of 10 bars, a residence time of 15 milliseconds and a $CH_4/H_2$ molar ratio of 0.5.

In the figure, indicated by a is a curve showing the relation between the yield of ethylene and the partial pressure of hydrogen for thermal cracking of naphtha ; indicated by b is a curve showing the relation between the yield of $C_3$ and $C_4$ olefins and the partial pressure of hydrogen for thermal cracking of naphtha ; by c is a curve showing the relation between the yield of ethylene and the partial pressure of hydrogen for thermal cracking of the vacuum residue from middle east petroleum ; and by d is a curve showing the relation between the total yield of $C_3$ and $C_4$ olefins and the partial pressure of hydrogen for thermal cracking of the vacuum residue. As will be clearly seen from the figure, with the thermal cracking of naphtha, the yield of ethylene increases with an increase of the partial pressure of hydrogen. However, the yield of the $C_3$ and $C_4$ olefins initially increases with an increase of the hydrogen partial pressure but a further increase of the partial pressure causes propylene and butadiene to be decomposed into ethylene and methane with a decrease in yield of these olefins. The yield of ethylene further increases due to the decomposition of these $C_3$ and $C_4$ olefins. The thermal cracking of the vacuum residue from middle east petroleum is fundamentally similar to the case of the thermal cracking of naphtha with regard to the influence of the partial pressure of hydrogen. More particularly, while the yield of ethylene increases with an increase of the partial pressure, the yield of the $C_3$ and $C_4$ olefins initially increases with an increase of the partial presssure and then decreases by decomposition into ethylene and methane when the partial pressure is further increased.

The thermal cracking of naphtha and the vacuum residue shows a similar tendency of the variation in yield of ethylene and yield of the $C_3$ and $C_4$ olefins in relation to an increase of the partial pressure of hydrogen. The level of the partial pressure of hydrogen which brings about the variation of these yields depends on the type of starting hydrocarbon. In order to obtain a high yield of olefins, the partial pressure of hydrogen is 0.1 bar or more for naphtha and 1.5 bar or more for the vacuum residue. Moreover, it will be found that the ratio of a yield of ethylene or a yield of the $C_3$ and $C_4$ olefins to the total yield of the products can be suitably controlled by varying the partial pressure of hydrogen. It will be also found that propylene and butadiene olefins are obtained in a high yield when the hydrogen content in the hot gas mixture of hydrogen, methane and steam prior to mixing with starting hydrocarbons is below 30 mol % (corresponding to a partial pressure of hydrogen below about 3 bars) for heavy hydrocarbons used as a starting hydrocarbon. When light hydrocarbon are used as a starting hydrocarbon, the hydrogen content is below 10 mol % (corresponding to a partial pressure of hydrogen below about 0.8 bar).

In Table 1, there are shown results of a test in which a vacuum residue from middle east petroleum is first partially burnt, heat energy and hydrogen necessary for the reaction are supplied, and naphtha and the vacuum residue are each thermally cracked.

(See Table I page 11)

Table I

| Example No. | 1 | 2 | 3 | 4 | 5 | 6 |
|---|---|---|---|---|---|---|
| Starting Hydrocarbon | Naphtha | Naphtha | Vacuum residue | Vacuum residue | Vacuum residue | Vacuum residue |
| Feed (kg/kg of starting oil) | | | | | | |
| (1) Fuel (vacuum residue) | 0.312 | 0.393 | 0.488 | 0.694 | 0.888 | 0.724 |
| (2) Oxygen | 0.699 | 0.817 | 0.781 | 0.888 | 0.995 | 0.926 |
| (3) Steam | 2.496 | 3.144 | 1.952 | 1.388 | 0.888 | 1.114 |
| (4) Methane | 0.035 | 0.050 | 0.075 | 0.116 | 0.151 | 0.303 |
| Flow Rate at Outlet of Reactor (kg/kg of starting oil) | | | | | | |
| (1) $H_2$ | 0.024 | 0.034 | 0.044 | 0.061 | 0.080 | 0.065 |
| (2) CO | 0.144 | 0.204 | 0.502 | 0.997 | 1.510 | 1.105 |
| (3) $CH_4$ | 0.149 | 0.175 | 0.244 | 0.303 | 0.354 | 0.439 |
| (4) $C_2H_4$ | 0.408 | 0.418 | 0.178 | 0.203 | 0.212 | 0.227 |
| (5) $C_2H_6$ | 0.094 | 0.119 | 0.037 | 0.053 | 0.059 | 0.048 |
| (6) $C_{3's}$ + $C_{4's}$ | 0.138 | 0.118 | 0.128 | 0.153 | 0.148 | 0.163 |
| (7) BTX | 0.139 | 0.143 | 0.043 | 0.048 | 0.050 | 0.054 |
| Outlet of Reactor | | | | | | |
| $H_2$/CO (mol/mol) | 2.33 | 2.31 | 1.21 | 0.85 | 0.73 | 0.82 |
| Concentration of hydrogen (mol%) | 5.8 | 6.7 | 11.4 | 16.5 | 21.8 | 17.0 |

As will be clear from the Table 1, Examples 1 and 2 refer to the thermal cracking process in which naphtha is used as a starting material and thermally cracked at a steam/fuel ratio by weight of 8 and an oxygen/fuel ratio by weight of 2 or greater. The concentration of hydrogen at the outlet of the reactor is as low as below 10 % and the resulting synthetic gas has an $H_2$/CO molar ratio is over 2.

On the other hand, Examples 3 through 5 make use of the vacuum residue from middle east petroleum as the starting material which is thermally cracked at a steam/fuel ratio by weight of below 6 and an oxygen/fuel ratio by weight of below 2. In these cases, the hydrogen concentration at the outlet of the reactor is over 10 %. The $H_2$/CO molar ratio of the resulting synthetic gas is below 2. It will be appreciated that the decrease of the oxygen/fuel ratio by weight results in an increase of the hydrogen concentration with a tendency of lowering the $H_2$/CO molar ratio. At the inlet of the reactor, the amount of generation of the synthetic gas depends on the oxygen/fuel ratio. Lower ratios result in a larger amount of the synthetic gas and thus the concentration of the synthetic gas increases. In contrast, the concentration of steam lowers, so that the reaction, $H_2 + CO_2 \leftrightarrows CO + H_2O$, tends proceed toward the right direction, thus the $H_2$/CO ratio being lowered.

Thus, the oxygen/fuel ratio, steam/fuel ratio and properties of fuel have the close relation with the concentration of synthetic gas and the $H_2/CO$ ratio and these factors are arbitrarily selected in consideration of the type of starting material and the composition of final product.

Example 6 is a case where the methane generated in Example 4 is recycled, so that a feed of methane to the reactor is increased. In Example 6, in order to make a concentration of hydrogen in the atmosphere of the reaction system almost equal to that of Example 4, an amount of steam is changed corresponding to an amount of methane. While methane is generated in an amount of 0.187 kg per kg of the starting material in Example 4, the amount is reduced to 0.136 kg in Example 6 with an increase of valuable olefins and BTX. From this, it will be understood that recycling of methane leads to a lowering of the yield of methane.

The results of Table 1 are obtained by setting the total pressure at 10 kg/cm$^2$ G (9,8 bars). As described before, proper control of the total pressure or the concentration of hydrogen may cause ethylen or $C_3$ and $C_4$ olefins to be produced in high selectivity. In order to obtain a higher yield of olefins from heavy hydrocarbons, a high partial pressure of hydrogen is necessary and thus a high hydrogen concentration is desirable.

In view of the results of these examples, the reaction conditions of the present invention are defined within the following ranges.

The partial pressure of hydrogen may vary depending on the type of starting hydrocarbon. Heavier hydrocarbons need a higher partial pressure of hydrogen. With light hydrocarbons such as naphtha, the partial pressure is preferably in the range not smaller than 0.1 bar. With heavy hydrocarbons such as various residues, shale oil, bitumen, tar, coal-liquefied oil, petroleum coke and the like, the partial pressure is preferably in the range not smaller than 1.5 bar.

The molar ratio of methane to hydrogen is such that if the ratio is below 0.05, the effect of methane is too small and the ratio should preferably be not smaller than 0.1. An increase of the ratio of methane brings about an increase of a heat energy required for heating the methane to a reaction temperature, inviting an increase of the energy cost. If the $CH_4/H_2$ molar ratio exceeds 4, its effect on the yield of olefins becomes very small. Thus, the ratio is preferably below 4. In this connection, however, $CH_4$ is a hydrogen source and may greatly contribute to improvements of heavy hydrocarbons and particularly coal with respect to properties thereof. In this sense, the molar ratio of $CH_4/H_2$ larger than 4 may be preferred in some cases.

In order to ensure good yield of olefins, the residence time is generally from 5 to 300 milliseconds, preferably from 10 to 100 milliseconds. The reaction temperature is preferably from 800 to 1 200 °C.

## Claims

1. A thermal cracking process for producing olefins and synthetic gas from hydrocarbons, the process comprising the steps of burning a hydrocarbon with less than the theoretical amount of oxygen in the presence of steam to give a hot gas of from 1 200 to 2 500 °C containing steam and synthetic gas wherein the hydrocarbon is burnt from 0.5 to 30 on the weight basis ; feeding methane to the hot gas containing the steam and the synthetic gas such that a molar ration of methane to hydrogen is over 0.05 to 4.0 ; further feeding a starting hydrocarbon being thermally cracked to the hot gas containing the methane, synthetic gas and steam ; keeping the mixture under conditions, at the outlet of a reactor, of a partial pressure of hydrogen not less than 0.1 bar, a temperature ranging from 800 to 1 200 °C, and a residence time ranging from 5 to 300 milliseconds thereby thermally cracking the starting hydrocarbon, and quenching the resulting product.

2. The thermal cracking process according to claim 1, wherein the partial pressure of hydrogen is not less than 0.1 bar when the starting hydrocarbon is a light hydrocarbon.

3. The thermal cracking process according to claim 1, wherein the partial pressure of hydrogen is not less than 1.5 bar when the starting hydrocarbon is a heavy hydrocarbon.

4. The thermal cracking process according to claim 1, wherein the residence time is from 10 to 100 milliseconds.

## Patentansprüche

1. Thermisches Crackverfahren zur Herstellung von Olefinen und Synthetikgas aus Kohlenwasserstoffen, gekennzeichnet durch : Verbrennen eines Kohlenwasserstoffes in Gegenwart von Dampf mit einem unter dem theoretischen Betrag liegenden Sauerstoffmenge, um ein heißes Gas von 1 200° bis 2 500 °C zu ergeben, das Dampf und Synthesegas enthält, wobei Kohlenwasserstoff zu von 0,5 bis 30 Massenanteile verbrannt wird ; Einspeisen von Methan in das Dampf und Synthesegas enthaltende Heißgas, so daß ein Molarverhältnis von Methan gegenüber Wasserstoff über 0,05 bis 4,4 besteht ; zusätzliches Einspeisen eines gerade thermisch gecrackten Starter-Kohlenwasserstoffes in das Methan, Synthesegas und Dampf enthaltende Heißgas ; Halten des Gemischs am Reaktorausgang unter Bedingungen eines nicht unter 0,1 Bar liegenden Partialwasserstoffdrucks, bei einer Temperatur im

Bereich von 800° bis 1 200 °C und bei einer Verweilzeit im Bereich von 5 bis 300 Millisekunden, wodurch der Starter-Kohlenwasserstoff thermisch gecrackt und das sich ergebende Produkt gelöscht wird.

2. Thermisches Crackverfahren nach Anspruch 1, dadurch gekennzeichnet, daß der Partialwasserstoffdruck nicht unter 0,1 Bar liegt, wenn als Starter-Kohlenwasserstoff ein leichter Kohlenwasserstoff verwendet wird.

3. Thermisches Crackverfahren nach Anspruch 1, dadurch gekennzeichnet, daß der Partialwasserstoffdruck nicht unter 1,5 Bar liegt, wenn als Starter-Kohlenwasserstoff ein schweres Kohlenwasserstoff verwendet wird.

4. Thermisches Crackverfahren nach Anspruch 1, dadurch gekennzeichnet, daß die Verweilzeit von 10 bis 100 Millisekunden beträgt.

**Revendications**

1. Procédé de craquage thermique pour produire des oléfines et du gaz synthétique à partir d'hydrocarbures, le procédé comprenant les étapes consistant à : brûler un hydrocarbure avec moins que la quantité théorique d'oxygène en présence de vapeur pour donner un gaz chaud à une température de 1 200 à 2 500 °C contenant de la vapeur et du gaz synthétique, dans lequel l'hydrocarbure est brûlé dans un rapport de 0,5 à 30 sur une base pondérale ; introduire du méthane dans le gaz chaud contenant la vapeur et le gaz synthétique de sorte que le rapport molaire méthane/hydrogène est compris entre 0,05 et 4,0 ; introduire ensuite un hydrocarbure de départ à craquer thermiquement dans le gaz chaud contenant le méthane, le gaz synthétique et la vapeur ; maintenir le mélange dans des conditions, à la sortie du réacteur, de pression partielle d'hydrogène non inférieure à 0,1 bar, une température comprise entre 800 et 1 200 °C, et un temps de séjour compris entre 5 et 300 millisecondes en craquant ainsi thermiquement l'hydrocarbure de départ, et tremper le produit résultant.

2. Procédé de craquage thermique selon la revendication 1, dans lequel la pression partielle d'hydrogène n'est pas inférieure à 0,1 bar quand l'hydrocarbure de départ est un hydrocarbure léger.

3. Procédé de craquage thermique selon la revendication 1, dans lequel la pression partielle d'hydrogène n'est pas inférieure à 1,5 bar quand l'hydrocarbure de départ est un hydrocarbure lourd.

4. Procédé de craquage thermique selon la revendication 1, dans lequel le temps de séjour est compris entre 10 et 100 millisecondes.

F I G. 1

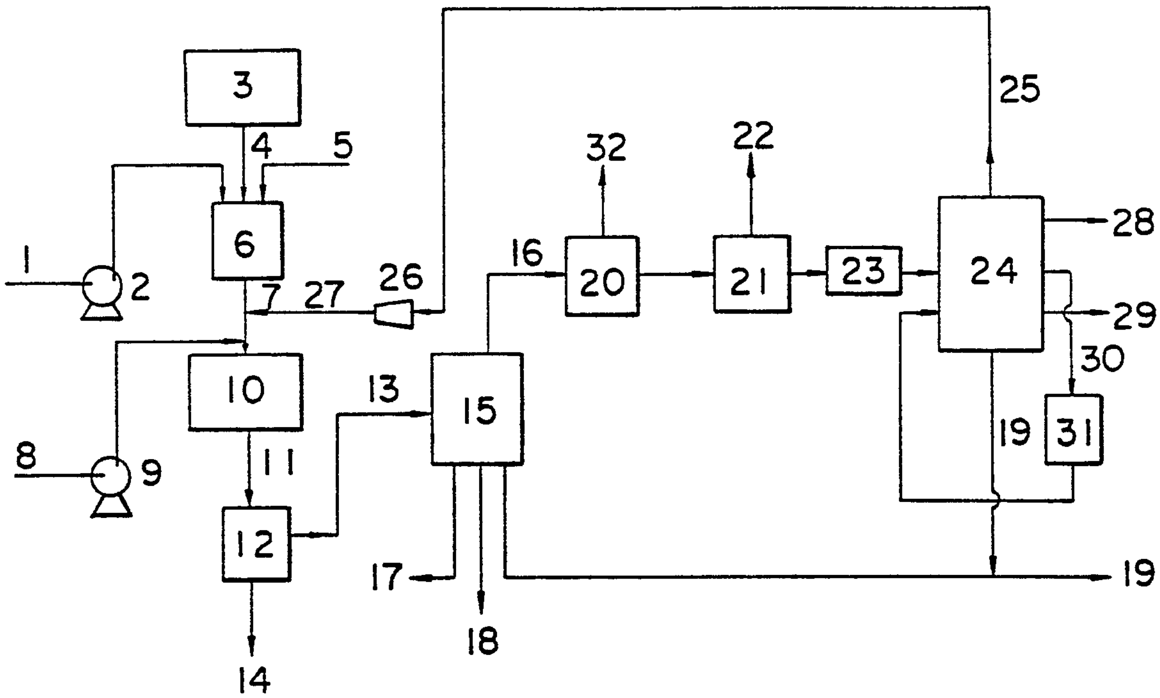
1
2
3
4
5
6
7
8
9
10
11
12
13
14
15
16
17
18
19
20
21
22
23
24
25
26
27
28
29
30
31
32

F I G. 2

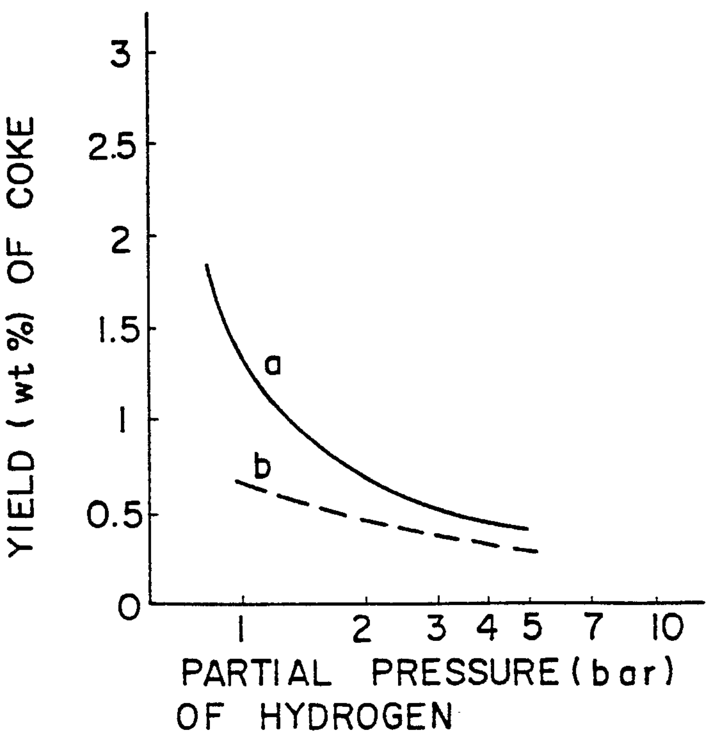
YIELD ( wt %) OF COKE
0
0.5
1
1.5
2
2.5
3
a
b
1
2
3
4
5
7
10
PARTIAL PRESSURE (bar)
OF HYDROGEN

# FIG. 3

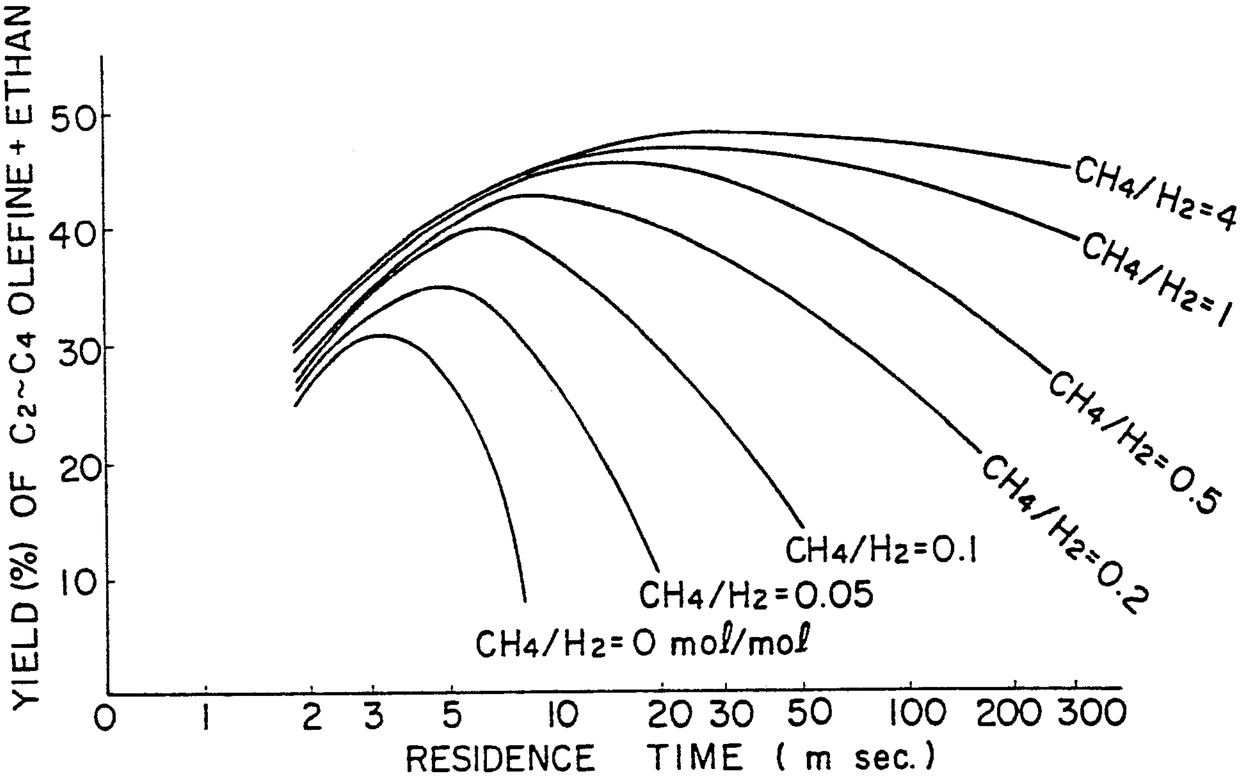
YIELD (%) OF C2~C4 OLEFINE + ETHAN
50
40
30
20
10
0
1
2
3
5
10
20
30
50
100
200
300
RESIDENCE TIME ( m sec.)
CH4/H2=4
CH4/H2=1
CH4/H2=0.5
CH4/H2=0.2
CH4/H2=0.1
CH4/H2=0.05
CH4/H2=0 mol/mol

# FIG. 4

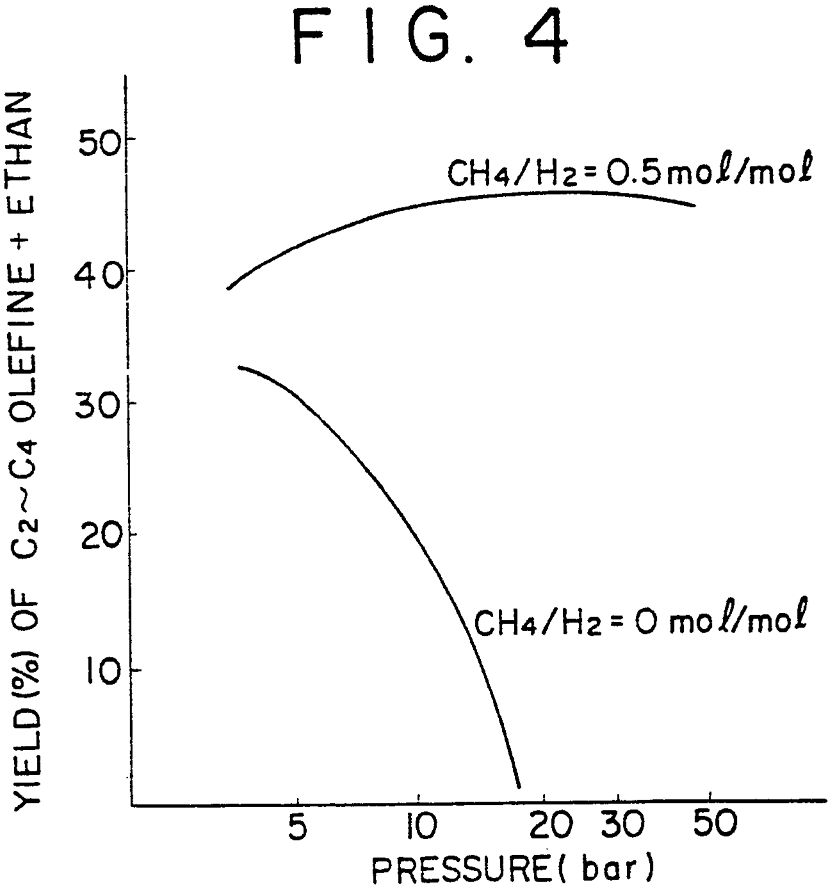
YIELD (%) OF C2~C4 OLEFINE + ETHAN
50
40
30
20
10
5
10
20
30
50
PRESSURE( bar)
CH4/H2=0.5mol/mol
CH4/H2=0 mol/mol

# FIG. 5

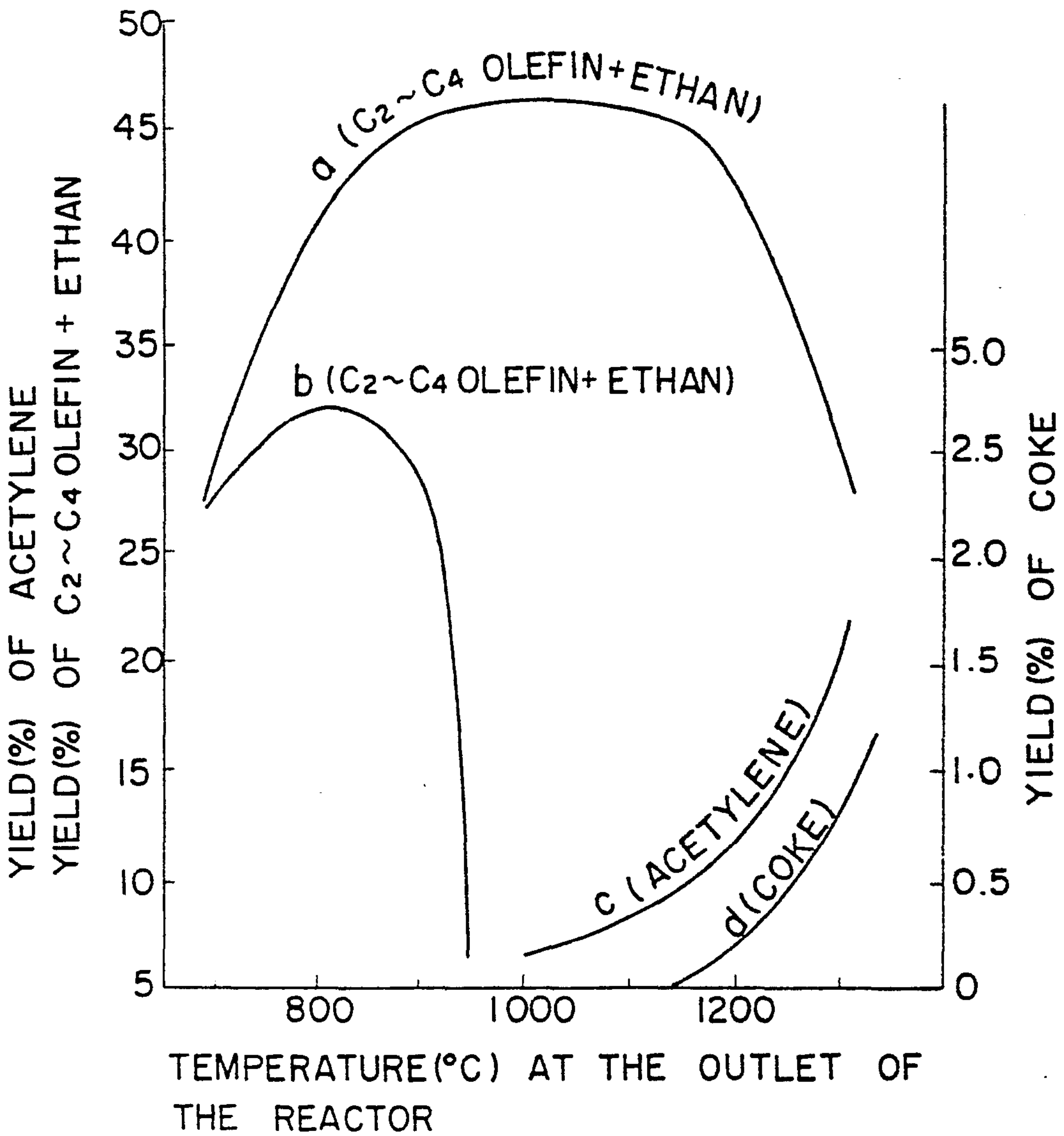
50
45
40
35
30
25
20
15
10
5
a (C2~C4 OLEFIN+ETHAN)
b (C2~C4 OLEFIN+ ETHAN)
c (ACETYLENE)
d (COKE)
5.0
2.5
2.0
1.5
1.0
0.5
0
800
1000
1200
YIELD(%) OF ACETYLENE
YIELD(%) OF C2~C4 OLEFIN + ETHAN
YIELD(%) OF COKE
TEMPERATURE(°C) AT THE OUTLET OF THE REACTOR

FIG. 6

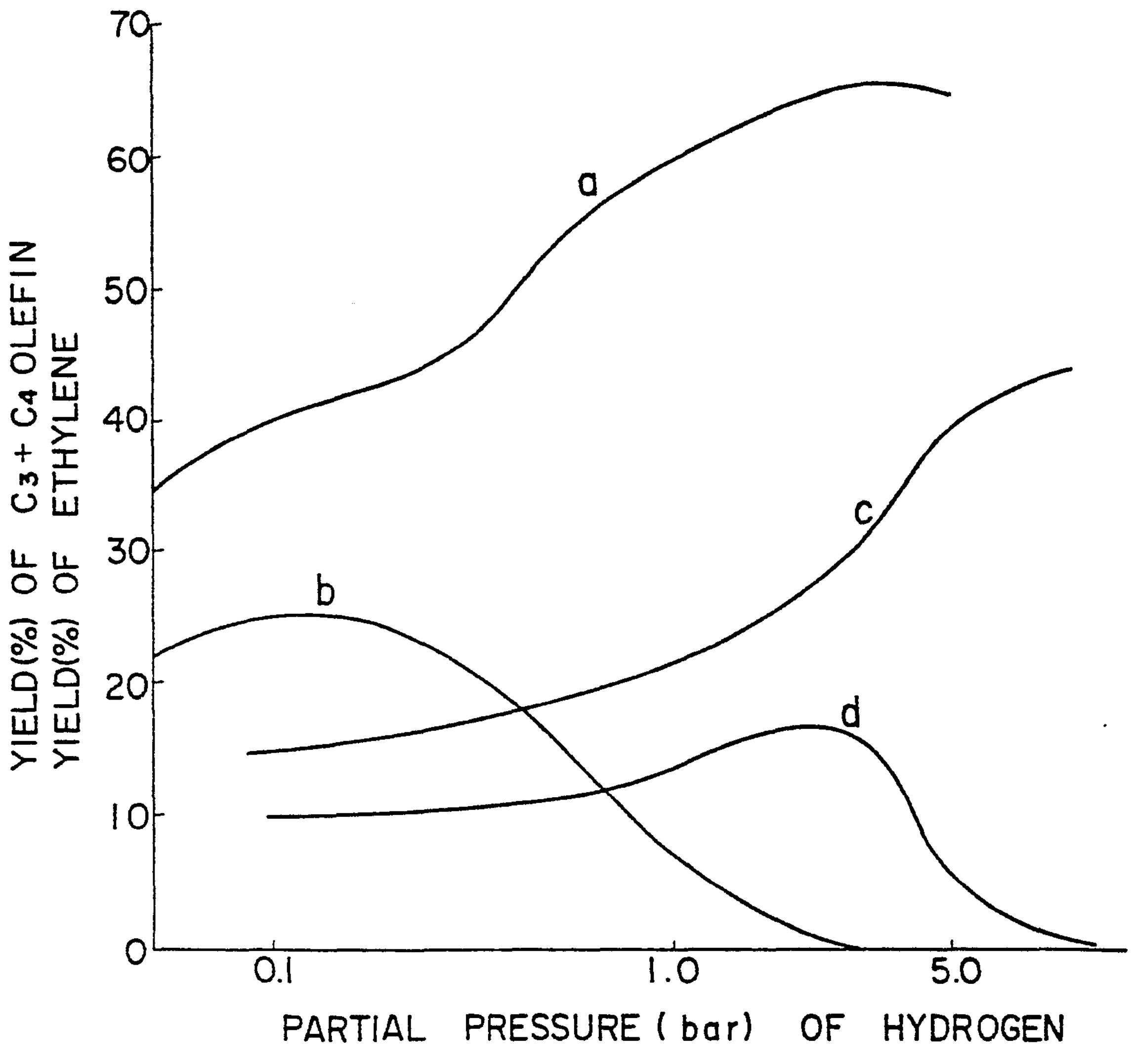
70
60
50
40
30
20
10
0
YIELD(%) OF C3 + C4 OLEFIN
YIELD(%) OF ETHYLENE
a
b
c
d
0.1
1.0
5.0
PARTIAL PRESSURE ( bar) OF HYDROGEN